# EUROPEAN PATENT APPLICATION

(11) **EP 2 208 911 A1**
(43) Date of publication of application: **21.07.2010**
(21) Application number: 09167091.9
(22) Date of filing: 03.08.2009
(51) Int. Cl.: F16F 9/02, F16F 9/32, B62K 25/04

(54) **Advanced triple piston damper**

(30) Priority: 19.01.2009 TH 20209
(71) Applicant: Y.S.S. (Thailand) Co. Ltd., 10540 Samutprakarn (TH)
(72) Inventor: Pinyo, Panichgasem, Bankok (TH)
(74) Representative: Pichat, Thierry

(57) **Abstract**

An advanced triple piston damper (ATPD), comprising three pistons (1), (2) and (3) working in relation, is **characterized in that** the piston set is designed to work as a damper for a pull-type shock absorber having three pistons performable at slow, intermediate, and high stroking speed. The respond of the shock absorber of the present invention is, therefore, much better than any gas type shock absorber of the prior art. In addition, the leakage problem is also avoided.

## Description

### FIELD OF THE INVENTION

Mechanical engineering, motorcycle

### BACKGROUND OF THE INVENTION

The advanced triple piston damper (ATPD) or the advanced triple-piston shock absorber of the present invention relates to the piston set of the pull-type shock absorber of a motorcycle. The piston set of the present invention is designed to perform as a damper for the pull-type shock absorber which has 3 pistons performable at slow, intermediate and high stroking speed.

The objective of the present invention is to provide a 3-piston shock absorber having respond better than any previous designs and nitrogen gas-type shock absorber. In addition, the shock absorber of the present invention also avoids leakage problem from the body of the shock absorber.

Typical shock absorber comprises one or two pistons.
For the mono-piston type shock absorber, the piston will counter the oil pressure when the piston rod moves. For the double-piston type shock absorber, a piston works in the same manner as the piston of the mono-piston type shock absorber while the second piston pressurizes the oil according to the pressure occurring in the cylinder. The movement of the second piston is caused by the pressure from nitrogen gas filled in the cylinder.

From the above mentioned problems, the objective of the present invention is therefore to provide a better piston set for the pull-type shock absorber of a motorcycle.

### BRIEF DESCRIPTION OF THE DRAWINGS

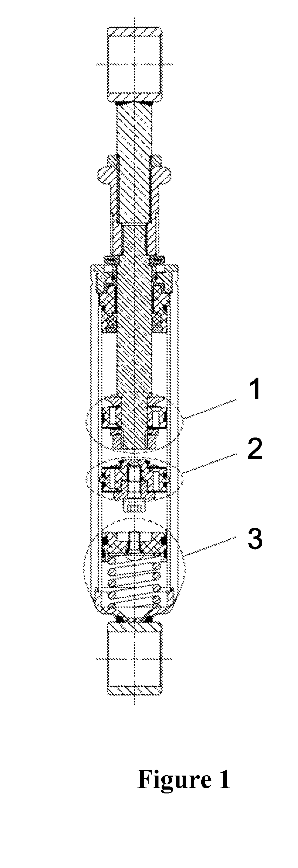

Figure 1 shows the internal structure of the advanced triple piston damper (ATPD) of the present invention.

### DETAIL DESCRIPTION OF THE PREFERRED EMBODIMENTS

First, let consider figure 1 which shows the internal structure of the advanced triple piston damper (ATPD) of the present invention. The ATPD of the present invention comprises 3 pistons. The first piston (1) counters the oil pressure when the piston moves in and out.

The second piston (2) also counters the oil pressure in the same manner as the first piston without having any displacement. During operation, the second piston (2) counters the oil pressure by using the thickness of the shims provide at both side of the piston.

The third piston (3) counters the oil pressure by using pressure from a spring loaded inside the cylinder rather than the pressure from nitrogen gas. When the piston rod of the third piston (3) moves, the third piston (3) will move while having resistance from the oil pressure acting above the piston and from the force of the spring acting beneath the piston.

Since the shock absorber of the present invention has three pistons working in relation, the respond of the shock absorber of the present invention is, therefore, much better than any gas type shock absorber of the prior art. In addition, the leakage problem is also avoided. An improved pull-type shock absorber for motorcycle is thus achieved. The shock absorber of the present invention also performs very well at low, intermediate, and high stroking speed.

## Claims

1. An advanced triple piston damper (ATPD) comprising three pistons (1), (2) and (3) working in relation, the piston set being designed to work as a damper for a pull-type shock absorber having three pistons performable at slow, intermediate, and high stroking speed.
